# EUROPÄISCHE PATENTSCHRIFT

(11) **EP 1 767 794 B1**
(45) Veröffentlichungstag und Bekanntmachung des Hinweises auf die Patenterteilung: **16.04.2008**
(21) Anmeldenummer: 06010133.4
(22) Anmeldetag: 17.05.2006
(51) Int. Cl.: F16B 13/00, E04F 13/08

(54) **Spreizdübel für die Befestigung von Dämmstoffplatten**
Expansion dowel for fastening insulating panels
Cheville à expansion pour la fixation de panneaux isolants

(30) Priorität: 27.09.2005 DE 102005046092
(43) Veröffentlichungstag der Anmeldung: 28.03.2007
(73) Patentinhaber: fischerwerke GmbH & Co. KG, 72178 Waldachtal (DE)
(72) Erfinder: Renz, Jürgen, 72202 Nagold (DE)
(74) Vertreter: Suchy, Ulrich Johannes

(56) Entgegenhaltungen:
- EP-A1- 1 457 688
- EP-A2- 0 834 658
- WO-A-03/016725

## Beschreibung

Die Erfindung betrifft einen Spreizdübel für die Befestigung von Dämmstoffplatten mit den Merkmalen des Oberbegriffs des Anspruchs 1.

Ein derartiger Spreizdübel ist aus der Druckschrift EP 1 457 688 A1 bekannt. Der bekannte Spreizdübel weist einen Spreizbereich auf, an den sich eine Verlängerung mit einem Halteteller anschließt. Zur Befestigung einer Dämmstoffplatte wird zunächst ein Bohrloch durch die Dämmstoffplatte bis in den Untergrund eingebracht. Dann wird der Spreizdübel in die Bohrung eingesteckt und durch Eintreiben des Spreizelements im Untergrund verankert. Das Spreizelement ist ein aus Kunststoff bestehender Schraubnagel, der mit Hilfe des für die Bohrung verwendeten Bohrers schlagend eingetrieben werden kann. Die Verwendung von Kunststoff hat gegenüber einem Spreizelement aus Metall den Vorteil, dass keinerlei Wärmebrücken durch den Spreizdübel gebildet werden bzw. dass der Spreizdübel selbst wie die Dämmstoffplatte isolierende Wirkung hat.

Schlagend eingetriebene Spreizelemente weisen gegenüber Schrauben den Nachteil auf, dass die Spreizdübel zum Teil geringere Haltewerte erreichen. Auch wird das schlagende Eintreiben häufig als unangenehmer als ein Schraubvorgang empfunden. Aufgrund der hohen Drehmomente werden für Spreizdübel mit Spreizschraube bisher jedoch ausschließlich Spreizschrauben verwendet, die zumindest teilweise aus Metall sind. Diese weisen jedoch die Problematik der Wärmebrückenbildung auf.

Der Erfindung liegt daher die Aufgabe zugrunde, einen Spreizdübel der eingangs genannten Art zu schaffen, dessen Spreizelement schraubend eingetrieben werden kann und dennoch die Bildung einer Wärmebrücke vermeidet.

Diese Aufgabe wird erfindungsgemäß durch die Merkmale des Anspruchs 1 gelöst.

Erfindungsgemäß wird als Spreizelement eine Spreizschraube aus Kunststoff verwendet. Soll eine derartige Spreizschraube hohe Haltekräfte entwickeln, so erfordert dies ein hohes Drehmoment beim Einschrauben in den Spreizbereich des Spreizdübels. Dabei ist es entscheidend, dass die Spreizschraube nicht im Bereich des Gewindes oder im Bereich zwischen Gewinde und Schraubenkopf reißt, da sie damit nicht mehr ihre Funktion erfüllen würde. Die Erfindung schlägt daher weiterhin vor, dass die Spreizschraube mit einer Sollbruchstelle an ihrem Kopf versehen ist. Die Sollbruchstelle ist so dimensioniert, dass die Spreizschraube stets zuerst an ihrem Kopf reißt bzw. tordiert, bevor sie ihre Funktion verliert. Das Moment, das zum Reißen der Sollbruchstelle führt, wird idealerweise erst erreicht, wenn der Kopf der Spreizschraube auf der hierfür vorgesehenen Dübelschulter aufsitzt, da dies bedeutet, dass die Spreizschraube in vorgesehener Weise in den Spreizbereich des Spreizdübels eingetrieben ist.

Die Sollbruchstelle kann durch unterschiedliche Schwächungen im Bereich des Kopfes ausgebildet werden. Eine besonders einfache Ausführungsform sieht vor, dass sie durch eine umlaufende Nut im Kopf der Spreizschraube gebildet ist. Daneben sind aber auch einzelne radiale Ausnehmungen oder eine Schwächung im Gefüge des Materials denkbar.

Vorzugsweise weist die Spreizschraube im Bereich der Schraubenspitze zunächst einen konischen Kernabschnitt auf, an den sich noch im Bereich des Gewindes ein zylindrischer Kernabschnitt anschließt. Hierdurch wird erreicht, dass das Drehmoment beim Einschrauben der Spreizschraube nicht schlagartig, sondern zunächst langsam ansteigt. Auch ergibt sich hierdurch eine vorteilhafte Drehmomentverteilung innerhalb der Schraube bei einer gleichzeitig vorteilhaften Spreizwirkung der Spreizschraube.

Das Gewinde überragt radial vorzugsweise den Kern und den sich an das Gewinde anschließenden Schaftabschnitt. Hierdurch wird ein guter Vortrieb der Spreizschraube in den Spreizbereich erreicht. Um hierbei die Dübelhülse im Spreizbereich nicht zu zerschneiden, schlägt die Erfindung vor, dass die Gewindeflanken der Spreizschraube verrundet sind.

Darüber hinaus hat es sich als vorteilhaft erwiesen, wenn der Außendurchmesser des Gewindes zum Schaft hin leicht zunimmt; vorzugsweise im hinteren Drittel größer als im vorderen Drittel ist. Der Außendurchmesser kann entweder stetig, bspw. linear, oder unstetig zunehmen. Ein besonders gutes Verhältnis zwischen maximalem Drehmoment, erreichbaren Haltewerten und der Eintreibgeschwindigkeit wird durch ein zweigängiges Gewinde erreicht. Gegenüber einem eingängigen Gewinde hat dies insbesondere den Vorteil, dass das Gewinde selbst zur Spreizwirkung beiträgt und einen guten Halt im Spreizbereich für den Vortrieb findet.

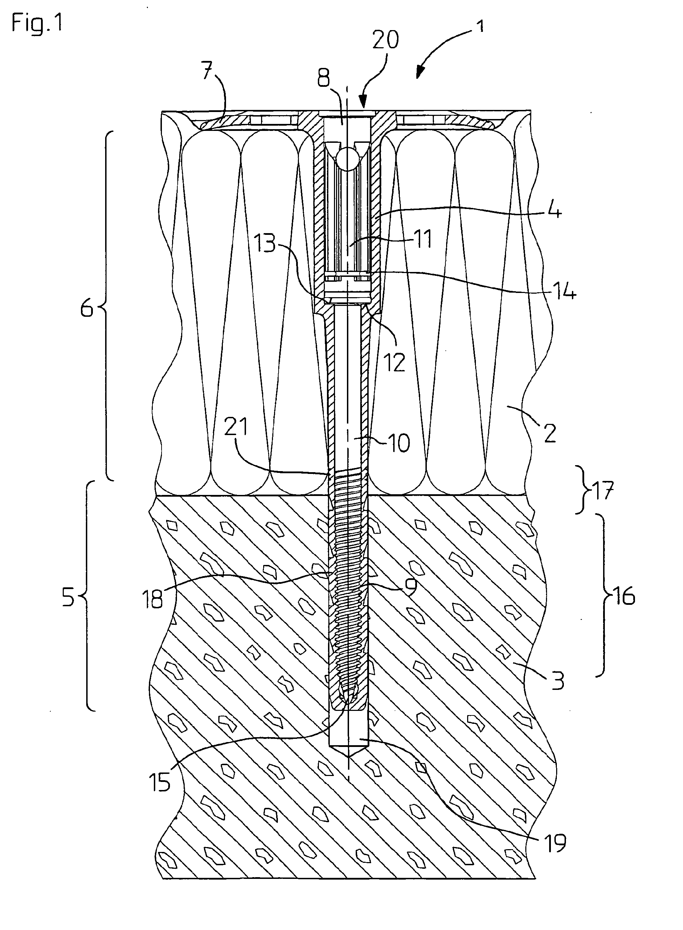

Die Erfindung wird nachfolgend anhand eines in der Zeichnung dargestellten Ausführungsbeispiels näher erläutert.

Die einzige Figur zeigt einen erfindungsgemäßen Spreizdübel 1, mit dem eine Dämmstoffplatte 2 an einem Untergrund 3 befestigt ist. Der Spreizdübel 1 weist eine Dübelhülse 4 mit einem Spreizbereich 5, einer Verlängerung 6 und einem sich hieran anschließenden Halteteller 7 auf. Der Spreizbereich kann durch nicht dargestellte in Längsrichtung verlaufende Schlitze oder Dehnstellen gebildet werden. Er wird durch die Spreizschraube 8 im Untergrund 3 verspreizt, wodurch die gewünschte Haltewirkung erreicht wird. Die Spreizschraube 8 ist aus Kunststoff gefertigt und weist ein Gewinde 9, einen sich hieran anschließenden Schaftabschnitt 10 sowie einen Kopf 11 auf. Der Kopf 11 sitzt mit der Schraubenschulter 12 auf der Dübelschulter 13 auf. An ihrem Kopf weist die Spreizschraube 8 eine als umlaufende Nut ausgeführte Sollbruchstelle 14 auf. Das Gewinde 9 der Spreizschraube 8 weist einen Außendurchmesser auf, der den des Schaftbereichs 10 überragt. Er ist in den der Schraubenspitze 15 zugewandten zwei Dritteln etwas kleiner als in dem dem Schaftabschnitt zugewandten Drittel. Der Kern des Gewindes 9 weist einen der Schraubenspitze 15 zugewandten konischen Kernabschnitt 16 sowie einen hieran anschließenden zylindrischen Kernabschnitt 17 auf. Das Gewinde 9 ist zweigängig mit abgerundeten Gewindeflanken 18. Der zylindrische Kernabschnitt 17 geht mit gleichem Durchmesser in den Schaftabschnitt 10 über.

Zur Erstellung einer Befestigung mit dem Spreizdübel 1 wird zunächst ein Bohrloch 19 durch die Dämmstoffplatte 2 bis in den Untergrund 3 hinein gebohrt. Im Weiteren wird der Spreizdübel 1 in die Bohrung 19 eingesteckt, bis der Halteteller 7 auf der Dämmstoffplatte 2 aufliegt. Anschließend wird die Spreizschraube 8, die bereits vormontiert in die Dübelhülse 4 eingesteckt sein kann, drehend in den Spreizbereich 5 des Spreizdübels 1 eingetrieben. Sie weist hierzu im Bereich des Kopfes 11 eine Werkzeugaufnahme 20 auf. Die Spreizschraube 8 wird soweit eingetrieben, bis die Schraubenschulter 12 auf der Dübelschulter 13 aufsitzt. Durch weiteres Eindrehen wird die Dübelhülse 4 im Bereich einer hierfür vorgesehenen Stauchzone 21 axial verkürzt, wodurch der Halteteller 7 in der Dämmstoffplatte 2 versenkt wird. Wenn über diese Stauchung hinaus weiteres, erhöhtes Drehmoment auf die Spreizschraube 8 aufgebracht wird, so schert der Kopf 11 der Spreizschraube 8 im Bereich der Sollbruchstelle 14 ab. Hierdurch wird gewährleistet, dass die Schraube nicht im Bereich des Gewindes 9 oder des Schaftabschnitts 10 versagt, was ihre Haltewirkung aufheben würde.

## Patentansprüche

1. Spreizdübel (1) für die Befestigung von Dämmstoffplatten (2), mit einem Spreizbereich (5), einem Spreizelement (8) aus Kunststoff und einem Halteteller (7), **dadurch gekennzeichnet, dass** das Spreizelement eine Spreizschraube (8) mit einer Sollbruchstelle (14) an ihrem Kopf (11) ist.

2. Spreizdübel nach Anspruch 1, **dadurch gekennzeichnet, dass** die Sollbruchstelle durch eine umlaufende Nut (14) im Kopf (11) der Spreizschraube (8) gebildet ist.

3. Spreizdübel nach Anspruch 1, **dadurch gekennzeichnet, dass** die Spreizschraube (8) im Bereich ihres Gewindes (9) einen konischen und einen zylindrischen Kernabschnitt (16, 17) aufweist.

4. Spreizdübel nach Anspruch 1, **dadurch gekennzeichnet, dass** der Außendurchmesser des Gewindes (9) der Spreizschraube (8) größer als der Außendurchmesser des sich an das Gewinde (9) anschließenden Schaftabschnitts (10) ist.

5. Spreizdübel nach Anspruch 1, **dadurch gekennzeichnet, dass** der Außendurchmesser des Gewindes (9) im dem Schaftabschnitt (10) zugewandten Drittel größer als den der Schraubenspitze (15) zugewandten zwei Dritteln ist.

6. Spreizdübel nach Anspruch 1, **dadurch gekennzeichnet, dass** die Gewindeflanken (18) der Spreizschraube (8) verrundet sind.

7. Spreizdübel nach Anspruch 1, **dadurch gekennzeichnet, dass** die Spreizschraube (8) ein zweigängiges Gewinde (9) aufweist.

## Claims

1. Expansible fixing plug (1) for fastening insulation panels (2), having an expansion region (5), an expansion element (8) of plastics material and a holding plate (7), **characterised in that** the expansion element is an expansion screw (8) having an intended breaking location (14) at its head (11).

2. Expansible fixing plug according to claim 1, **characterised in that** the intended breaking location is formed by a circumferential groove (14) in the head (11) of the expansion screw (8).

3. Expansible fixing plug according to claim 1, **characterised in that** the expansion screw (8) has, in the region of its thread (9), a conical and a cylindrical core portion (16, 17).

4. Expansible fixing plug according to claim 1, **characterised in that** the external diameter of the thread (9) of the expansion screw (8) is larger than the external diameter of the shank portion (10) adjoining the thread (9).

5. Expansible fixing plug according to claim 1, **characterised in that** the external diameter of the thread (9) in the one third facing the shank portion (10) is larger than in the two thirds facing the screw tip (15).

6. Expansible fixing plug according to claim 1, **characterised in that** the thread flanks (18) of the expansion screw (8) are rounded.

7. Expansible fixing plug according to claim 1, **characterised in that** the expansion screw (8) has a two-start thread (9).

## Revendications

1. Cheville à expansion (1) pour la fixation de panneaux isolants (2), avec une zone d'expansion (5), un élément d'expansion (8) en plastique et un plateau de retenue (7), **caractérisée en ce que** l'élément d'expansion est une vis d'expansion (8) avec un point destiné à la rupture (14) au niveau de la tête (11).

2. Cheville à expansion selon la revendication 1, **caractérisée en ce que** le point destiné à la rupture est formé par une rainure tournante (14) dans la tête (11) de la vis d'expansion (8).

3. Cheville à expansion selon la revendication 1, **caractérisée en ce que** la vis d'expansion (8) présente une section centrale (16, 17) conique et cylindrique dans la région de son filetage (9).

4. Cheville à expansion selon la revendication 1, **caractérisée en ce que** le diamètre externe du filetage (9) de la vis d'expansion (8) est supérieur au diamètre externe de la section de queue (10) rejoignant le filetage (9).

5. Cheville à expansion selon la revendication 1, **caractérisée en ce que** le diamètre externe du filetage (9) dans le tiers orienté vers la section de queue (10) est supérieur à celui du second tiers orienté vers la pointe de la vis (15).

6. Cheville à expansion selon la revendication 1, **caractérisée en ce que** les flancs de filetage (18) de la vis d'expansion (8) sont arrondis.

7. Cheville à expansion selon la a revendication 1, **caractérisée en ce que** la vis à expansion (8) présente un filetage à filet double (9).
